# EUROPEAN PATENT SPECIFICATION

(11) **EP 0 589 096 B1**
(45) Date of publication and mention of the grant of the patent: **27.12.1996**
(21) Application number: 92202936.8
(22) Date of filing: 24.09.1992
(51) Int. Cl.: E05F 15/06, E05F 15/14, B61D 19/00

(54) **Equipment for ejection doors for railway and tramway vehicles**
Einrichtung für Schwenkschiebetüren für Eisenbahn- und Strassenbahnfahrzeuge
Equipement pour portes coulissantes-louvoyantes pour véhicules de chemin de fer ou de voie de tramway

(43) Date of publication of application: 30.03.1994
(73) Proprietor: O.C.L.A.P. S.R.L., 10060 Piscina (IT)
(72) Inventor: Losito, Pietro, I-10060 Frossasco (Torino) (IT)
(74) Representative: Robba, Eugenio

(56) References cited:
- WO-A-90/15218
- CH-A- 474 656
- FR-A- 2 094 969
- GB-A- 832 069
- GB-A- 1 439 940

## Description

The present invention refers to an equipment operating ejection doors for railway and tramway vehicles.

Systems are known to be currently used on railway and tramway coaches and/or vehicles, to open and close their doors.

These systems are essentially based on rotation devices, and sometimes on ejection devices with a subsequent translation.

In the first systems, the basic problem was the overall dimensions, or the space required by the door movement to be opened and closed, that is usually very high.

In ejection systems with subsequent translation, the overall dimensions are greatly reduced with respect to the above-mentioned rotation systems, but the complexity of these controls remains. FR-A-2 094 969, which is the closest prior art, discloses a sliding door with pivoting supports.

Purpose of the present invention is realizing a door opening and closing system for railway and tramway vehicles of the above-mentioned type with ejection and translation, simple and reliable, that allows easy operation of the doors themselves, guaranteeing at the same time minimum overall dimensions required for their opening and closing.

The equipment operating ejection doors for railway and tramway vehicles being considered is that disclosed in Claim 1.

The invention will now be described in detail with particular reference to the enclosed drawings, provided as a non-limiting example, in which:

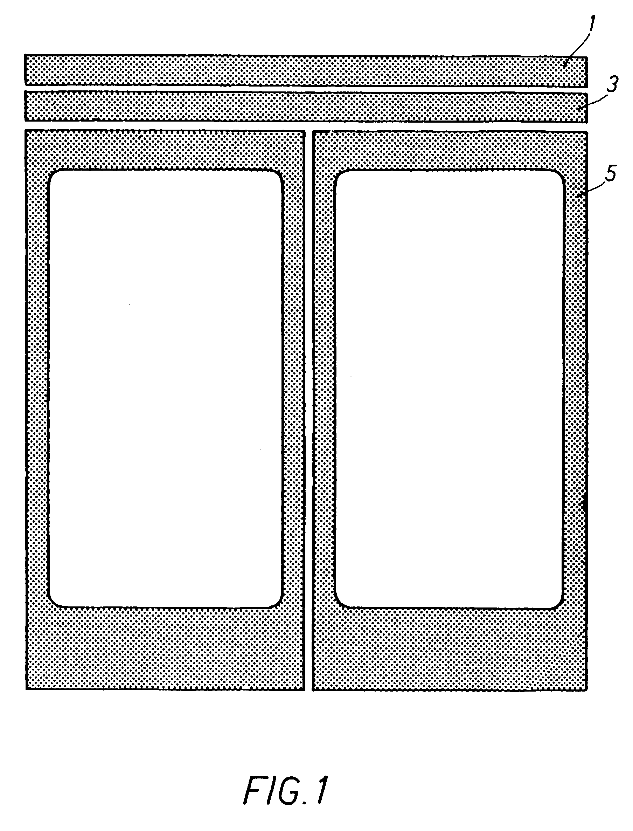

- figure 1 is a schematic view of the equipment composition;
- figure 2 is a perspective view showing the motion transmission and ejection control assembly with electric control;
- figure 3 is a schematic top view of the wing, bracket, sliding track assembly;
- figure 4 is a schematic side view, partially sectioned, of the motion transmission and ejection control assembly in figure 2;
- figure 5 is a perspective view showing the motion transmission and ejection control assembly with pneumatic control;

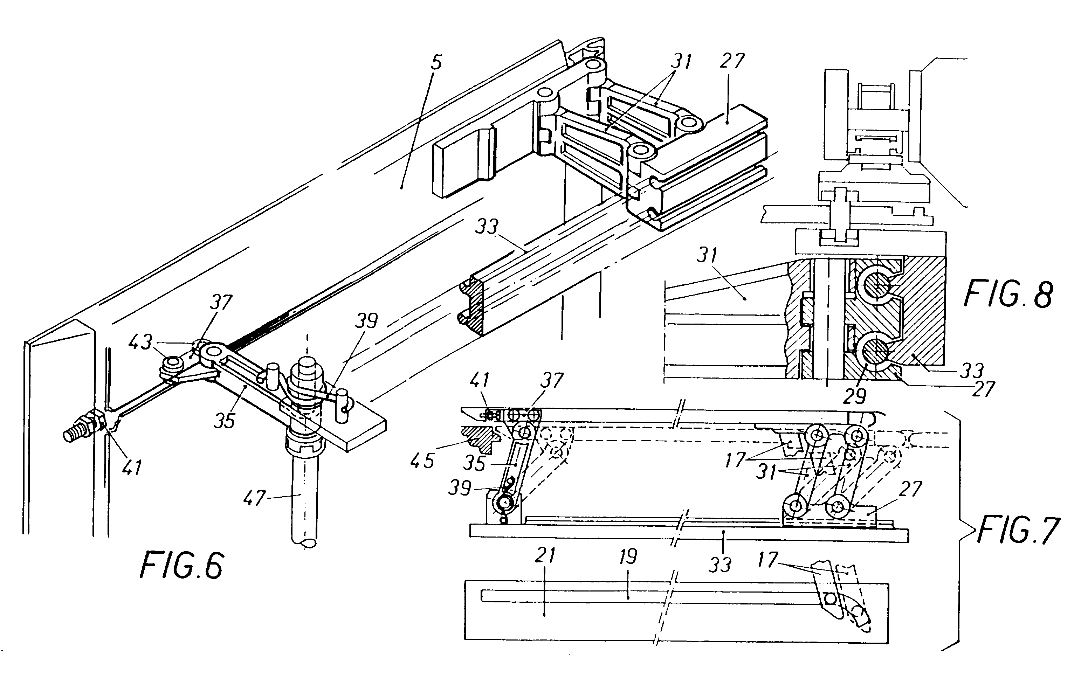

- figure 6 is a perspective view showing the wing translation, releasing and support assembly;
- figure 7 is an exploded schematic view, from the top, showing the wing translation, releasing and support assembly and the motion transmission and ejection control assembly;
- figure 8 is a schematic side view, partially sectioned, of the wing translation, releasing and support assembly in figure 6, connected to the motion transmission and ejection control assembly in figure 4.

Referring to the figures, the equipment operating ejection doors for railway and tramway vehicles being considered comprises:
- a motion transmission and ejection control assembly 1,
- at least two wings 5, where each one of the wings 5 is associated with a track providing a slideway 19, and
- a wing translation, releasing and support assembly 3.

The motion transmission and ejection control assembly 1 is substantially composed of a motor means 7 that transmits through respective toothed driving wheels 11 opposed conjugate motion to two aligned endless toothed belts 9. The motion transmission and ejection control assembly 1 further comprises, for each one of the wings 5, a wing-drawing slide 13, integrally attached to one of the two endless belts 9 and linearly slidably supported along a ball guide 15; and a bracket 17 interconnecting wing 5, slide 13 and track 19. The bracket 17 is fixedly attached to the corresponding wing 5 and is laterally slidably engaged, at an upper portion, with the corresponding wing-drawing slide 13 to move longitudinally therewith and is also slidably engaged, at a lower portion, to slide longitudinally in the slideway of the respective track 19; these tracks 19 are provided in fixed shelf-like elements 21 so as to be rectilinear along a section corresponding to a longitudinal stroke of each wing 5, and then inwardly curved at an inner extremity thereof so as to induce a transverse, respectively ejection or closure, stroke of the wing 5.

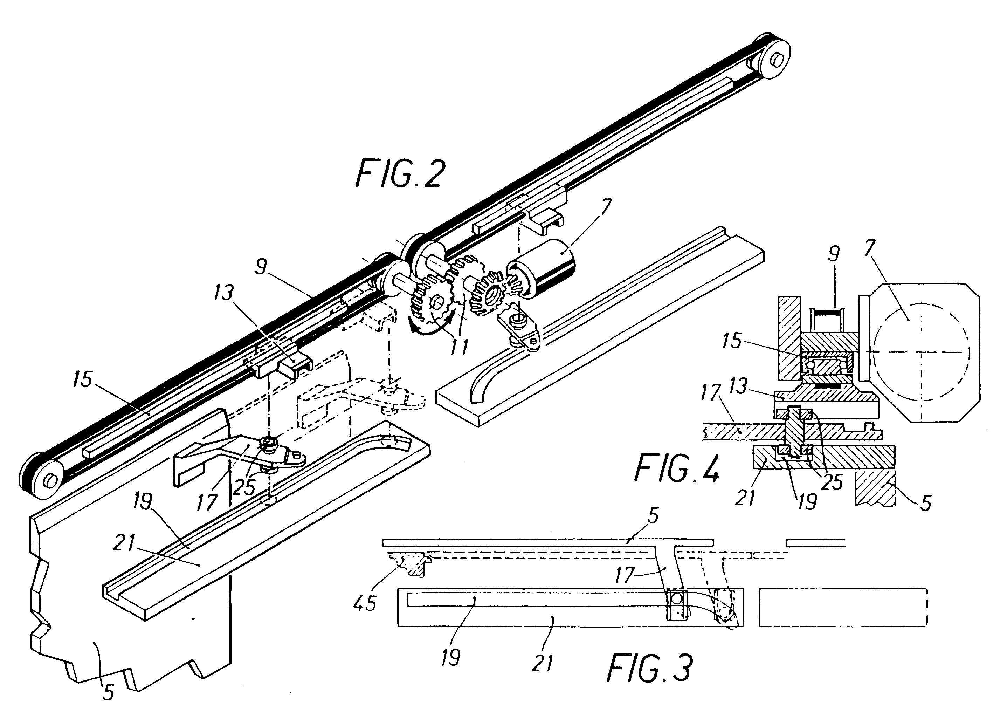

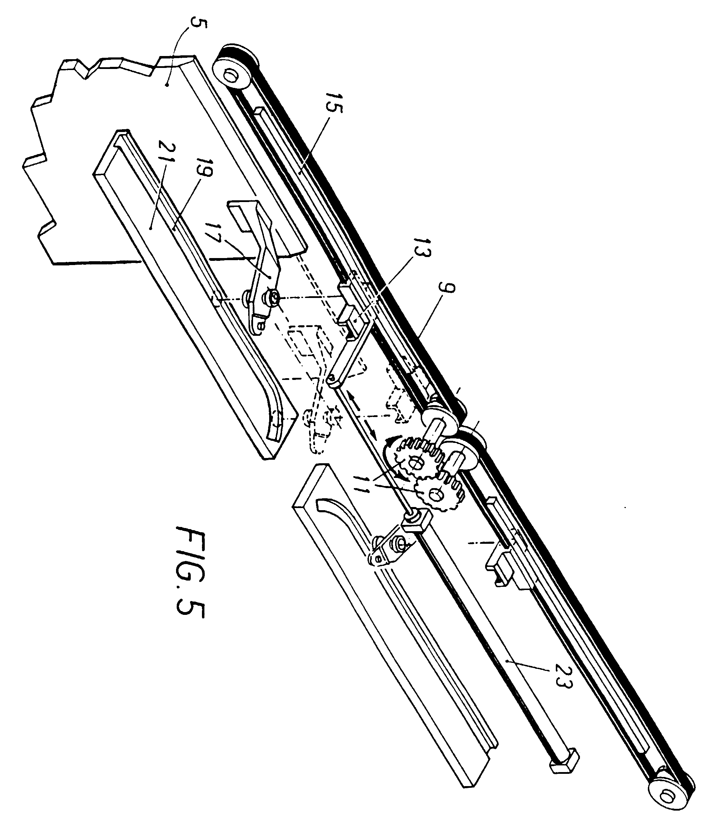

In figure 2, the motor means of the assembly 1 is composed of an electric motor 7; in figure 5, said motor means is composed of a cylinder 23 with fluid pressure, in particular of a pneumatic cylinder.

The brackets 17 connecting wings 5, slides 13 and tracks 19 are equipped at their free ends with rolling bearings 25 suitable to be engaged to the track 19 in the shelf 21 and in the seat of the wing-drawing slide 13.

The wing translation, releasing and support assembly 3 is substantially composed of: a wing-supporting guide 27 slidably supported via a linear ball bearing 29 on a fixed guide 33 attached to the motion transmission and ejection control assembly 1; a pantograph system 31 (involving at least two arms 31 per wing 5) pivotally connecting the wing to the wing-supporting guide; a pivotally mounted releasing arm 35 linked to a sliding support 37 provided on the wing 5 so as to guide the wing 5 during its translation and applying, by means of a torsion spring 39, a release stroke for initially spreading the wings 5 apart, which stroke permits insertion of hands between the wings to facilitate their opening in case of emergency; and an adjusting screw 41, for positioning the wing translation, releasing and support assembly 3 with respect to a fixed vehicle framework 45 by adjusting the longitudinal sliding of the assembly 3 during the final closure stage.

Reference number 43 shows the rolling bearings provided at the end of the releasing arm 35. The edge 45 of the fixed framework is the one with respect to which the wings 5 move, during their ejection or closure.

The torsion spring 39 is wound around a column 47, running vertically and shown interrupted downwards: hinging of the wings 5 in their lower part is a mirror image of the above-described hinging with releasing arm 35, sliding support 37 and torsion spring 39 placed on the lower side and connected to the lower end, not shown, of the column 47.

The wings 5 comprise a frame of light-alloy extruded members, panelled with two sheets made of materials such as aluminium or the like, with the internal volumes filled with a honey-comb structure made of the same materials.

Gaskets are housed on the perimeter of wings and framework edges, guaranteeing their seal when the doors are closed; some cuff gaskets, also working as "sensible edge", being housed along the vertical edges of the wings; said gaskets being made of self-extinguishing materials, complying with the safety standards related to fires in railway rolling stock.

## Claims

1. Equipment operating ejection doors for railway and tramway vehicles, comprising:
- a motion transmission and ejection control assembly (1),
- at least two wings (5), each one of said wings (5) being associated with a track providing a slideway (19), and
- a wing translation, releasing and support assembly (3);
characterized in that
- the motion transmission and ejection control assembly (1) is composed of: a motor means (7) that transmits through respective toothed driving wheels (11) opposed conjugate motion to two aligned endless toothed belts (9); and for each one of said wings (5), a wing-drawing slide (13), integrally attached to one of the two endless belts (9) and linearly slidably supported along a ball guide (15), and a bracket (17) interconnecting said wing (5), slide (13) and track (19), one bracket being fixedly attached to each wing, being laterally slidably engaged, at an upper portion, with the corresponding wing-drawing slide (13) to move longitudinally therewith and also being slidably engaged, at a lower portion, to slide longitudinally in the slideway of the respective track (19); said tracks (19) being provided in fixed shelf-like elements (21) so as to be rectilinear along a section corresponding to a longitudinal stroke of each wing (5), and then inwardly curved at an inner extremity thereof so as to induce a transverse, respectively ejection or closure, stroke of the wing; in that
- the wing translation, releasing and support assembly (3) is composed of: a wing-supporting guide (27) slidably supported via a linear ball bearing (29) on a fixed guide (33) attached to the motion transmission and ejection control assembly (1); a pantograph system (31) involving at least two arms (31) per wing and pivotally connecting the wing to the wing-supporting guide; a pivotally mounted releasing arm (35) linked to a sliding support (37) provided on the wing (5) so as to guide the wing (5) during its translation and applying, by means of a torsion spring (39), a release stroke for initially spreading the wings (5) apart, which stroke permits insertion of hands between the wings to facilitate their opening in case of emergency; and an adjusting screw (41) for positioning the wing translation, releasing and support assembly (3) with respect to a fixed vehicle framework (45) by adjusting the longitudinal sliding of said assembly (3) during the final closure stage; and in that
- the wings (5) comprise a frame of light-alloy extruded members, panelled with two sheets made of material such as aluminium, the internal volumes being filled with a honey-comb structure made of the same material.

2. Equipment operating ejection doors for railway and tramway vehicles according to claim 1, characterized in that the motor means (7) of the motion transmission and ejection control assembly (1) is composed of an electric motor with direct current power.

3. Equipment operating ejection doors for railway and tramway vehicles according to claim 1, characterized in that the motor means (7) of the motion transmission and ejection control assembly (1) is composed of a cylinder (23) with fluid pressure, generally a pneumatic cylinder.

4. Equipment operating ejection doors for railway and tramway vehicles according to any one of the previous claims, characterized in that the hinging of the wings (5) in their lower part is a mirror image of the hinging of the column (47) with the wing-driving arm (35) and the sliding support (37) provided in the wing translation, releasing and support assembly (3); around said column (47) being provided also in its lower part a torsion spring (39) suitable to allow with the torsion spring (39) provided in the upper part, a first spreading-apart stroke of the wings (5), stroke allowing the insertion of hands between the wings to facilite their opening in case of emergency.

5. Equipment operating ejection doors for railway and tramway vehicles according to any one of the previous claims, characterized in that gaskets are housed on the perimeter of the wings (5) and the framework edges (45), guaranteeing their seal when the doors are closed; some cuff gaskets, also working as "sensible edge", being housed along the vertical edges of the wings; said gaskets being made of self-extinguishing materials, complying with the safety standards related to fires in railway rolling stock.

## Patentansprüche

1. Aufstoßtüren für Eisenbahn- und Straßenbahnfahrzeuge betätigende Einrichtung, umfassend:
- eine Bewegungsübertragungs- und Aufstoßsteuerungs-Baueinheit (1),
- mindestens zwei Flügel (5), wobei jeder der besagten Flügel (5) mit einer Schiene (19) verbunden ist, die eine Gleitführung bereitstellt, und
- eine Flügeltranslations-, Freigabe- und Trage-Baueinheit (3);
dadurch gekennzeichnet, daß
- die Bewegungsübertragungs- und Aufstoßsteuerungs-Baueinheit (1) besteht aus: einer Motoreinrichtung (7), die durch jeweilige Antriebszahnräder (11) eine entgegengesetzte gepaarte Bewegung auf zwei fluchtende Endloszahnriemen (9) überträgt, und für jeden der besagten Flügel (5) einem Flügelzugschieber (13), welcher als Einheit an einem der beiden Endlosriemen (9) angebracht ist und entlang einer Kugelführung (15) linear verschiebbar gehalten wird, sowie einem Ausleger (17), welcher den besagten Flügel (5), den Schieber (13) und die Schiene (19) miteinander verbindet, wobei ein Ausleger (17) starr an jedem Flügel (5) angebracht ist, wobei er an einem oberen Teil in seitlicher Richtung verschiebbar mit dem entsprechenden Flügelzugschieber (13) im Eingriff steht, um sich in Längsrichtung mit diesem zu bewegen, und auch an einem unteren Teil verschiebbar im Eingriff steht, um sich in Längsrichtung in der Gleitführung der jeweiligen Schiene (19) zu verschieben, wobei die besagten Schienen (19) in ortsfesten bordartigen Elementen (21) vorgesehen sind, so daß sie entlang eines Abschnitts geradlinig sind, der einem Längshub jedes Flügels (5) entspricht, und dann an ihrem inneren Ende nach innen gekrümmt sind, so daß sie einen quer verlaufenden Aufstoß- bzw. Schließhub des Flügels (5) hervorrufen; daß
- die Flügeltranslations-, Freigabe- und Trage-Baueinheit (3) besteht aus: einer Flügeltragführung (27), die über ein Linearkugellager (29) verschiebbar auf einer an der Bewegungsübertragungs- und Aufstoßsteuerungs-Baueinheit (1) angebrachten ortsfesten Führung (33) gehalten wird, einem mindestens zwei Arme (31) pro Flügel beinhaltenden und den Flügel schwenkbar mit der Flügeltragführung verbindenden Pantographsystem (31), einem schwenkbar angebrachten Freigabearm (35), der mit einer auf dem Flügel (5) vorgesehenen Gleithalterung (37) gekoppelt ist, so daß er den Flügel (5) während seiner Translation führt und mittels einer Torsionsfeder (39) einen Freigabehub aufbringt, um die Flügel (5) zu Beginn auseinander zu spreizen, wobei dieser Hub das Einführen von Händen zwischen die Flügel gestattet, um deren Öffnen im Notfall zu erleichtern, sowie einer Einstellschraube (41), um die Flügeltranslations-, Freigabe- und Trage-Baueinheit (3) durch Einstellung der Längsverschiebung der besagten Baueinheit (3) während des letzten Schließstadiums in bezug zu einem ortsfesten Fahrzeugtragrahmen (45) zu positionieren; und daß
- die Flügel (5) einen Rahmen aus extrudierten Trägern aus einer Leichtmetallegierung umfassen, der mit zwei Blechen verkleidet ist, welche aus einem Material, wie beispielsweise Aluminium bestehen, wobei die inneren Volumina mit einer aus demselben Material bestehenden Wabenstruktur gefüllt sind.

2. Aufstoßtüren für Eisenbahn- und Straßenbahnfahrzeuge betätigende Einrichtung nach Anspruch 1, dadurch gekennzeichnet, daß die Motoreinrichtung (7) der Bewegungsübertragungs- und Aufstoßsteuerungs-Baueinheit (1) aus einem Gleichstrom-Elektromotor besteht.

3. Aufstoßtüren für Eisenbahn- und Straßenbahnfahrzeuge betätigende Einrichtung nach Anspruch 1, dadurch gekennzeichnet, daß die Motoreinrichtung (7) der Bewegungsübertragungs- und Aufstoßsteuerungs-Baueinheit (1) aus einem Zylinder (23) mit Fluiddruck besteht, im allgemeinen einem Druckluftzylinder.

4. Aufstoßtüren für Eisenbahn- und Straßenbahnfahrzeuge betätigende Einrichtung nach einem beliebigen der vorangehenden Ansprüche, dadurch gekennzeichnet, daß die Anlenkung der Flügel (5) in ihrem unteren Teil ein Spiegelbild der Anlenkung der Säule (47) mit dem Flügelantriebsarm (35) und der in der Flügeltranslations-, Freigabe- und Trage-Baueinheit (3) vorgesehenen Gleithalterung (37) ist, wobei um die besagte Säule (47) auch in ihrem unteren Teil eine Torsionsfeder (39) vorgesehen ist, die geeignet ist, um zusammen mit der im oberen Teil vorgesehenen Torsionsfeder (39) einen ersten Auseinanderspreizhub der Flügel (5) zu ermöglichen, wobei dieser Hub das Einführen von Händen zwischen die Flügel ermöglicht, um ihr Öffnen im Notfall zu erleichtern.

5. Aufstoßtüren für Eisenbahn- und Straßenbahnfahrzeuge betätigende Einrichtung nach einen beliebigen der vorangehenden Ansprüche, dadurch gekennzeichnet, daß Dichtungen auf dem Umfang der Flügel (5) und den Tragrahmenrändern (45) untergebracht sind, welche ihre Abdichtung garantieren, wenn die Türen geschlossen sind, wobei einige Dichtmanschetten-Dichtungen, die auch als "empfindlicher Rand" arbeiten, entlang der vertikalen Ränder der Flügel untergebracht sind, wobei die besagten Dichtungen aus selbstverlöschenden Materialien hergestellt sind, welche die Sicherheitsrichtlinien bezüglich Feuer in einem Eisenbahnfahrzeugpark erfüllen.

## Revendications

1. Matériel actionnant des portes à éjection pour véhicules de chemin de fer et de tramway, comprenant:
- un ensemble de commande de transmission de mouvement et d'éjection (1),
- au moins deux ouvrants (5), chacun desdits ouvrants 5 étant associé à un patin (19) offrant un chemin de coulissement, et
- un ensemble de translation, de dégagement et de support d'ouvrant (3), caractérisé par le fait que
- l'ensemble de commande de transmission de mouvement et d'éjection (1) se compose de: un moyen moteur (7) qui transmet, par l'intermédiaire de roues dentées d'entraînement (11) respectives, un mouvement conjugué opposé à deux courroies sans fin dentées (9) alignées et, pour chacun desdits ouvrants (5), un chariot de traction d'ouvrant (13) fixé de manière solidaire à l'une des deux courroies sans fin (9) et supporté de manière coulissable linéairement le long d'un guide à billes (15) et un bras-support (17) reliant entre eux lesdits ouvrant (5), chariot (13) et patin (19), un bras-support étant attaché de manière fixe à chaque ouvrant, venant en prise, de manière coulissable latéralement, à la partie supérieure, avec le chariot de traction d'ouvrant (13) correspondant, pour se déplacer longitudinalement avec ce dernier, et venant également en prise, de manière coulissable, à la partie inférieure, pour coulisser longitudinalement dans le chemin de coulissement du patin (19) correspondant, lesdits patins (19) étant aménagés dans des éléments fixes (21) en forme d'étagère, de manière à être rectilignes dans un segment correspondant à une course longitudinale de chaque ouvrant (5), et ensuite recourbés vers l'intérieur, à leur extrémité intérieure, de manière à induire une course transversale, respectivement d'éjection ou de fermeture, de l'ouvrant,
- que l'ensemble de translation, de dégagement et de support d'ouvrant (3) se compose de: un guide-support d'ouvrant (27) supporté de manière coulissable par l'intermédiaire d'un roulement à billes (29) sur un guide fixe (33) fixé à l'ensemble de commande de transmission de mouvement et d'éjection (1), un système de pantographe (31), comprenant au moins deux bras (31) par ouvrant 5, reliant de manière pivotable l'ouvrant au guide-support d'ouvrant, un bras de dégagement (35), monté de manière pivotable, relié à un support coulissable (37) prévu sur l'ouvrant (5), de manière à guider l'ouvrant (5) au cours de sa translation, et appliquant, à l'aide d'un ressort de torsion (39), une course de dégagement, pour initialement écarter les ouvrants (5) l'un de l'autre, course qui permet d'insérer les mains entre les ouvrants pour faciliter leur ouverture en cas de secours, et une vis de réglage (41), pour positionner l'ensemble de translation, de dégagement et de support d'ouvrant (3) par rapport à un châssis de véhicule fixe (45) en réglant le coulissement longitudinal dudit ensemble (3) pendant l'étape de fermeture finale, et
- que les ouvrants (5) comprennent un cadre constitué d'éléments extrudés en alliage léger, revêtu de deux panneaux en un matériau tel qu'aluminium, les volumes intérieurs étant remplis d'une structure à nids d'abeilles réalisée dans le même matériau.

2. Matériel actionnant des portes à éjection pour véhicules de chemin de fer et de tramway suivant la revendication 1, caractérisé par le fait que le moyen moteur (7) de l'ensemble de commande de transmission de mouvement et d'éjection (1) se compose d'un moteur électrique alimenté en courant continu.

3. Matériel actionnant des portes à éjection pour véhicules de chemin de fer et de tramway suivant la revendication 1 ou 2, caractérisé par le fait que le moyen moteur (7) de l'ensemble de commande de transmission de mouvement et d'éjection (1) se compose d'un cylindre (23) à pression de fluide, généralement un cylindre pneumatique.

4. Matériel actionnant des portes à éjection pour véhicules de chemin de fer et de tramway suivant l'une quelconque des revendications précédentes, caractérisé par le fait que l'articulation des ouvrants (5) dans leur partie inférieure est une image-miroir de l'articulation de la colonne (47), avec le bras d'entraînement de porte (35) et le support coulissant (37) prévus dans l'ensemble de translation, de dégagement et de support d'ouvrant (3), autour de ladite colonne (47) étant prévu, également dans sa partie inférieure, un ressort de torsion (39) convenant pour permettre, avec le ressort de torsion (39) prévu dans la partie supérieure, une première course d'écartement des ouvrants (5), course qui permet d'insérer les mains entre les ouvrants pour faciliter leur ouverture en cas de secours.

5. Matériel actionnant des portes à éjection pour véhicules de chemin de fer et de tramway suivant l'une quelconque des revendications précédentes, caractérisé par le fait que des joints sont logés sur le périmètre des ouvrants (5) et sur les bords de cadre (45), garantissant leur étanchéité lorsque les portes sont fermées, certains joints en forme de manchette, agissant également comme "bord sensible", étant logés le long des bords verticaux des ouvrants, lesdits joints étant réalisés en matériaux auto-extincteurs répondant aux normes de sécurité en matière d'incendie dans le matériel roulant de chemin de fer.
